# EUROPEAN PATENT APPLICATION

(11) **EP 3 719 671 A1**
(43) Date of publication of application: **07.10.2020**
(21) Application number: 19172667.8
(22) Date of filing: 03.05.2019
(51) Int. Cl.: G06F 16/93, G06F 16/901, G06F 16/36, G06N 3/02

(54) **SYSTEM FOR MAINTAINING A VIRTUAL LIBRARY OF DOCUMENTS AND METHOD OF OPERATING SUCH SYSTEM**

(30) Priority: 03.04.2019 EP 19167180
(71) Applicant: Laich, Hilke, 70182 Stuttgart (DE); Malyshev, Aleksandr Andreevich, 119261 Mockba (RU)
(72) Inventor: Laich, Hilke, 70182 Stuttgart (DE); Malyshev, Aleksandr Andreevich, 119261 Mockba (RU)
(74) Representative: Meyer zu Bexten, Elmar

(57) **Abstract**

Problem

In recent years, the amount of published scientific articles has grown tremendously. Hence, there exists a great demand for tools that aid in discovering new articles as well as representing existing papers.

Solution

The problem is solved by a system for maintaining a virtual library of documents, such as scientific publications, of interest to a user of the system, said system comprising two machine learning modules and a user interface for accessing the library and modules.

## Description

### Technical Field

The invention relates to the product and process as per the first portion of the independent claims.

### Background Art

PTL1 discloses a knowledge research and mapping system and method that automatically construct a knowledge research map representing the researched topics, their inter-relationships, and related responses retrieved through the processing of, for example, a natural language or Boolean query that is automatically submitted via a knowledge search tool to a database.

### Summary of invention

The invention as claimed is hereinafter disclosed in such a way that the technical problem with which it deals can be appreciated and the solution can be understood.

### Technical Problem

In recent years, the amount of published scientific articles has grown tremendously. Hence, there exists a great demand for tools that aid in discovering new articles as well as representing existing papers.

### Solution to Problem

The problem is solved as per the second portion of Claim 1.

### Advantageous effect of invention

The invention provides a user with a semantically linked graph of his articles library and recommendations based on this library. Also, the invention allows users to store new articles, share graphs, and change them manually. This inventive approach not only helps the user to navigate and effectively use his library, but also recommends to him articles based on his library and reflecting his interests.

### Brief description of drawings

Figure 1 shows a semantic similarity model.
Figure 2 shows a keyword extraction model for the semantic representation module.
Figure 3 shows a user interface.

### Description of embodiments

In a preferred embodiment, the user enters the system and adds documents to his library, selects among the documents for building a graph of the selected documents, obtains the graph by means of two machine learning modules, and, optionally, changes and shares the graph.

The machine learning modules comprise a semantic representation module, which creates a graph of articles based on their text descriptions (abstracts or full text). Every node in the graph is associated with a research paper, and there are two variants for drawing edges between nodes.

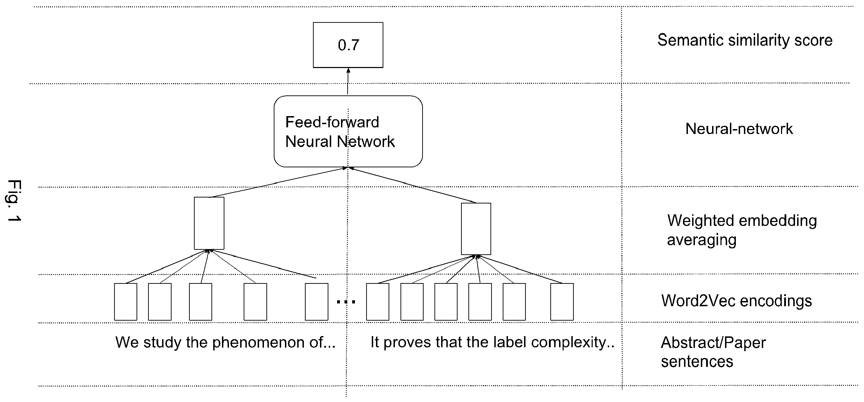

By way of a first variant that may be referred to as citation prediction (see Figure 1), a "probability of citation" is predicted for each pair of articles, and the edge is drawn if this score exceeds a given threshold value. To predict said probability of citation, the abstracts or full texts of the documents are split into words from which word embeddings are produced, such as by the enhanced Skip-gram model of NPL1; for each of the paired documents, the word embeddings are then aggregated into text embeddings, such as the sentence embeddings produced by the method as per NPL2. These steps are performed in parallel for both articles, whereupon the sentence embeddings for both documents are concatenated and fed to an artificial - preferably feed-forward - dense neural network that outputs the score. Herein, the training score equals 1/*k n*, where *n* denotes the length of the shortest path between two articles in the graph and *k* is applied as a hyperparameter.

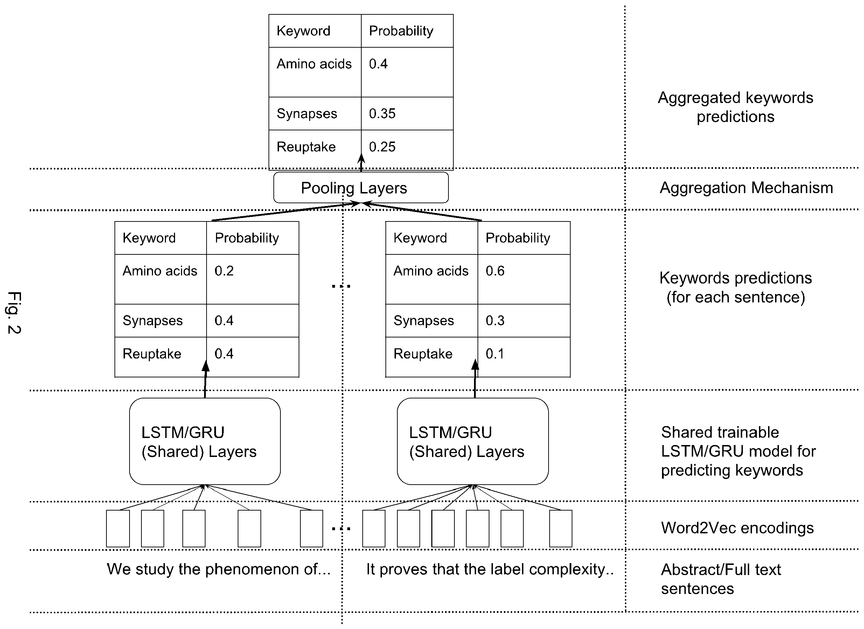

By way of a second variant that may be referred to as keyword extraction (see Figure 2), the network receives a text from a single article and infers the keywords from it. An edge between two articles is added if they have more than a given number of keywords in common. Herein, the prediction of keywords is accomplished by embedding every word from the input text - such as by using the Word2Vec algorithm proposed in NPL1 -, feeding the vectors thus obtained to one of the recurrent artificial neural networks proposed in NPL3 or NPL4, and sharing the network weights for each sentence, that is, feeding in parallel each sentence to the network that outputs the probabilities for each keyword to be relevant to that sentence. The vectors obtained in this fashion are aggregated into a single vector, using a pooling algorithm such as the well-known average pooling.

The machine learning modules further comprise a semantic recommendation module, which employs the graphs previously generated by the semantic representation module to recommend further documents, such as from an Internet database. This this end, the user picks one or several among the documents based upon his interest, and the system searches the entire database for *p* further documents in closest semantic proximity to the selected documents, with *p* serving as a hyperparameter. The system ultimately returns a graph with links between the articles thus selected.

### Example

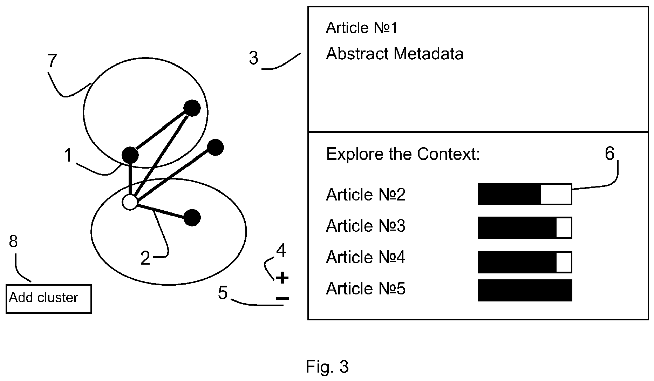

A graph, as is exemplified by the schematic screen layout of Figure 3, is an object as per definition 1 of NPL5. Herein, each vertex in the graph represents an article. Thus, each vertex has a set of attributes, which correspond to the attributes of that article it represents. Said attributes include a title, abstract, list of authors, and other metadata.

Preferably, each vertex is assigned one of two colors. A first color is assigned to articles that are contained in the user's library; a second color is assigned to all other articles.

Each edge in the graph represents a relationship between two articles that meet or exceed a given level of semantic similarity.

On the right side of the screen, a panel contains two visual blocks. The upper block displays information on an article represented by a selected vertex within the graph, corresponding to the user having selected that article. The lower block lists articles that correspond to vertices connected to the selected vertex. In an additional bar chart, a column for each of said articles indicates its level of similarity to that article currently selected by the user.

It is noted that the user may scale the graph at his discretion. To this end, the user interface comprises two buttons to respectively magnify or reduce the graph. In the present example, these buttons are at the center of the screen, to the left of a panel with two visual blocks.

The skilled artisan will appreciate that the user can change the position of the entire graph by moving one of its vertices. Furthermore, the user may choose to delete vertices and edges.

Finally, the user may opt to group selected vertices into so-called clusters. A vertex may be included in multiple such clusters or entirely independent of them. Each cluster is assigned a color that is displayed on the screen. To add clusters, the inclined user would click the button located in the lower left corner of the screen, then click and drag on the canvas to draw an ellipse around those vertices to be included in the new cluster.

### Industrial applicability

The invention is applicable, inter alia, throughout the education and media industries.

### Reference signs list

- 1: Vertex or node
- 2: Edge
- 3: Metadata
- 4: Scale up
- 5: Scale down
- 6: Level of similarity
- 7: Cluster
- 8: Add cluster

### Citation list

The following literature has been cited hereinbefore.

### Patent literature

PTL1: US 2010235340 A (INVENTION MACHINE CORP [US]) 16.09.2010

### Non-patent literature

NPL1: MIKOLOV, Tomas, et al. Distributed Representations of Words and Phrases and their Compositionality. Advances in neural information processing systems. 2013, p.3111-3119.
NPL2: ARORA, Sanjeev, et al. A simple but tough-to-beat baseline for sentence embeddings. International Conference on Learning Representations. 2017.
NPL3: HOCHREITER, Sepp, et al. Long short-term memory. Neural computation. 1997, vol.9, no.8, p.1735-1780.
NPL4: CHO, Kyunghyun, et al. Learning phrase representations using RNN encoder-decoder for statistical machine translation. Empirical Methods on Natural Language Processing. 2014.
NPL5: ROSEN, Kenneth H., et al. Discrete mathematics and its applications: with combinatorics and graph theory. 7th edition. New York: McGraw-Hill, 2012. ISBN 0073383090. p.641.

## Claims

1. System for maintaining a virtual library of documents, such as scientific publications, of interest to a user of the system
**characterized in**
two machine learning modules and
a user interface for accessing the library and modules.

2. System as per Claim 1
**characterized in that**
the modules comprise a semantic representation module and a semantic recommendation module.

3. Method of operating the system as per Claim 2
**characterized in that**
the user enters the system and adds the documents,
the user selects among the documents for building a graph of the selected documents,
the user obtains the graph by means of the modules, each document being represented by a node of the graph, and,
preferably, the user changes and shares the graph.

4. Method as per Claim 3
**characterized in that**
the semantic representation module creates the graph based on verbal descriptions such as abstracts or full texts of the documents.

5. Method as per Claim 4
**characterized in that**,
to create the graph, the descriptions of documents are split into words from which word embeddings are produced, such as by a Skip-gram model.

6. Method as per Claim 5
**characterized in that**,
for each pair among the documents, the nodes representing the paired documents are connected by an edge if a semantic similarity score of the documents, such as a probability of cross-citation between the documents, meets a given threshold.

7. Method as per Claim 6
**characterized in that**, to determine the score,
for each of the paired documents, the word embeddings are aggregated into text embeddings such as sentence embeddings and
the sentence embeddings for both documents are concatenated and fed to an artificial, preferably feed-forward, neural network that outputs the score.

8. Method as per Claim 4
**characterized in that**,
for each pair among the documents, the nodes representing the paired documents are connected by an edge if the documents share a given number of keywords.

9. Method as per Claim 8
**characterized in that**, to infer the keywords,
for each of the paired documents, the word embeddings are fed to an artificial, preferably recurrent, neural network that outputs, for each sentence of the respective document, a relevance of each keyword,
for each keyword and each of the paired documents, the relevance is, preferably using a pooling algorithm such as average pooling, aggregated across all sentences.

10. Method as per any of Claim 3 through Claim 9
**characterized in that**
the semantic recommendation module uses graphs previously generated by the semantic representation module to recommend further documents, such as from a database.

11. Method as per Claim 10
**characterized in that**, to recommend the further documents,
the user selects among the documents based upon interest,
the system determines the further documents in closest semantic proximity to the selected documents, and
the system generates a further graph linking the further documents.

12. Computer program comprising instructions which, when the program is executed by a computer, cause the computer to carry out the method of any of Claim 3 through Claim 11.

13. Data carrier signal carrying the program of Claim 12.
